# EUROPEAN PATENT SPECIFICATION

(11) **EP 4 159 034 B1**
(45) Date of publication and mention of the grant of the patent: **05.11.2025**
(21) Application number: 20937966.8
(22) Date of filing: 20.08.2020
(51) Int. Cl.: A01K 73/02

(54) **BEAM STRUCTURE FOR WATER LAYER VARIATION ADJUSTMENT OF ANTARCTIC KRILL TRAWL**
BALKENSTRUKTUR ZUR ANPASSUNG DER WASSERSCHICHTVARIATION EINES ANTARKTISCHEN KRILLSCHLEPPNETZES
STRUCTURE DE PERCHE POUR AJUSTEMENT DE VARIATION DE COUCHE D'EAU DE CHALUT DE KRILL ANTARCTIQUE

(30) Priority: 27.05.2020 CN 202010461560
(43) Date of publication of application: 05.04.2023
(73) Proprietor: East China Sea Fishery Research Institute Chinese Academy of Fishery Sciences, Shanghai 200090 (CN)
(72) Inventor: WANG, Lumin, Shanghai 200090 (CN); WANG, Yongjin, Shanghai 200090 (CN); QI, Guangrui, Shanghai 200090 (CN); YU, Wenwen, Shanghai 200090 (CN)
(74) Representative: 2K Patentanwälte Blasberg Kewitz & Reichel
(86) International application number: PCT/CN2020/110201
(87) International publication number: WO 2021/237955

(56) References cited:
- EP-B1- 2 320 720
- WO-A1-2007/108702
- WO-A1-2007/148974
- CN-A- 109 463 359
- CN-A- 110 521 682
- CN-A- 111 513 035
- CN-U- 205 671 291
- CN-U- 207 927 596
- CN-U- 210 168 804
- KR-A- 20090 079 735
- US-A- 2 729 910
- US-A- 2 945 469
- US-A- 3 460 384

## Description

The present invention relates to the technical field of beam trawls, and particularly relates to a metalimnion adjusting beam structure for a euphausia superba trawl.

### BACKGROUND

WO 2007/108702 A1 discloses a trawl device that is towed after a trawl vessel, wherein the trawl, for spreading open the opening of the trawl, has an elongate hydrofoil to which the trawl, by its upper transverse length of the trawl opening, is attached, and also has a weight or weights attached to at least one position in the lower part of the trawl opening, for example, the two lower corners of the trawl opening. The device can be used with one or more trawls that are towed side by side, or with two trawls one above the other and fastened to a common trawl.

In a situation of an existing beam trawl for euphausia superba fishing, the trawl is loaded by a beam, the beam is connected to a fishing vessel pulling system through a pulling rope, and the fishing vessel sails to pull the beam trawl to achieve sweeping fishing. A water level depth of the existing beam trawl can only be controlled by controlling a length of the pulling rope and a sailing speed of the fishing vessel, and cannot fulfil an active rising-diving adjustment function.

### SUMMARY

A technical problem to be solved by the present invention is to provide a metalimnion adjusting beam structure for a euphausia superba trawl, so as to realize controllable and active rising-diving adjustment of the beam trawl.

A technical solution used by the present invention to solve the technical problem is provided by attached claim 1. Advantageous embodiments are the subject of the dependent claims.

### Beneficial effects

First, according to the present invention, the transmission shaft can be driven by the forward drive hydrodynamic generating mechanism and the reverse drive hydrodynamic generating mechanism to rotate bidirectionally, so that the wing plates are driven to rotate around the center shaft of the transmission shaft, and the angle of the wing plates can be adjusted. Therefore, a direction of an acting force between the wing plates and water flow in a process of moving in a water body can be changed, and an effect of actively controlling the beam trawl to be up and down is achieved.

Second, according to the present invention, a water depth of the trawl can be detected in real time, and therefore the angle of the wing plates can be adjusted in real time. The water depth of the beam trawl is adjusted in real time based on a balance between the wing plates and the beam trawl pulling rope, and tracking, aiming and fishing of euphausia superba can be realized by the beam trawl through metalimnion adjustment of the beam trawl.

### BRIEF DESCRIPTION OF THE DRAWINGS

Fig. 1 is a schematic structural diagram of the present invention.
Fig. 2 is a schematic diagram of transmission of the present invention.

### DETAILED DESCRIPTION

The present invention will be further described below in combination with specific embodiments. It should be understood that these embodiments are merely used for describing the present invention, rather than limiting the scope of the present invention. It should be further understood that, after reading content described in the present invention, those of skill in the art may make various changes or modifications to the present invention, and these equivalent forms fall into the scope limited by the claims of the present invention.

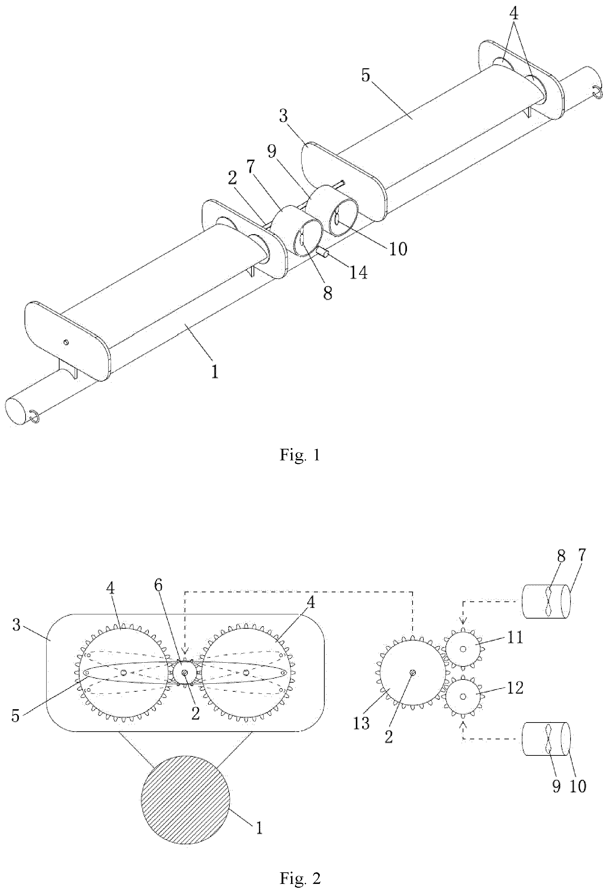

A metalimnion adjusting beam structure for a euphausia superba trawl shown in Fig. 1 and Fig. 2 includes a beam 1, a forward drive hydrodynamic generating mechanism, a reverse drive hydrodynamic generating mechanism, a transmission mechanism, and rising-diving adjusting wing mechanisms. The rising-diving adjusting wing mechanisms are symmetrically arranged on two sides of the beam 1 respectively, the forward drive hydrodynamic generating mechanism and the reverse drive hydrodynamic generating mechanism are installed on the beam 1 and are located between the rising-diving adjusting wing mechanisms on the two sides, and the rising-diving adjusting wing mechanisms on the two sides are synchronously driven by the transmission mechanism.

The forward drive hydrodynamic generating mechanism includes a first fairing 7, a forward impeller 8 and a forward output shaft. The forward impeller 8 is installed inside the first fairing 7, and the forward output shaft is connected to the forward impeller 8. When the forward drive hydrodynamic generating mechanism moves in a water body along with the beam 1, the forward impeller 8 can be driven to rotate in a forward direction through a hydrodynamic force. The reverse drive hydrodynamic generating mechanism includes a second fairing 9, a reverse impeller 10 and a reverse output shaft. The reverse impeller 10 is installed inside the second fairing 9, and the reverse output shaft is connected to the reverse impeller 10. When the reverse drive hydrodynamic generating mechanism moves in the water body along with the beam 1, the reverse impeller 10 can be driven to rotate in the forward direction through the hydrodynamic force.

The transmission mechanism includes the transmission shaft 2, a second gear 6, a first bevel gear 11, a second bevel gear 12, and a third bevel gear 13. The transmission shaft 2 is arranged in a direction parallel to the beam 1. The third bevel gear 13 is installed on the transmission shaft 2, the first bevel gear 11 is installed on the forward output shaft, the second bevel gear 12 is installed on the reverse output shaft, and the first bevel gear 11 and the second bevel gear 12 respectively mesh with the third bevel gear. The transmission shaft 2 rotates in opposite directions respectively through non-synchronous drive of the forward drive hydrodynamic generating mechanism and the reverse drive hydrodynamic generating mechanism.

In order to realize non-synchronous drive of the forward drive hydrodynamic generating mechanism and the reverse drive hydrodynamic generating mechanism, solenoid butterfly valves may be respectively arranged at stream approaching ends of the first fairing 7 and the second fairing 9 and respectively control on/off of the first fairing 7 and the second fairing 9, thus realizing non-synchronous drive.

In order to realize non-synchronous drive of the forward drive hydrodynamic generating mechanism and the reverse drive hydrodynamic generating mechanism, electromagnetic locks may also be respectively arranged on the forward output shaft and the reverse output shaft and respectively control transmission on-off between the forward output shaft and the reverse output shaft, thus realizing non-synchronous drive. Hydrodynamic generators are respectively installed inside the first fairing 7 and the second fairing 9, the hydrodynamic generators are respectively driven by the forward impeller 8 and the reverse impeller 10 to generate electricity, and the electromagnetic locks are respectively powered by the hydrodynamic generators, thus realizing self-energizing.

The rising-diving adjusting wing mechanism includes installation plates 3, first gears 4 and a wing plate 5 with a shuttle-shaped cross section, the installation plates 3 are fixedly installed on the beam 1 in parallel and opposite modes, the two first gears 4 are respectively installed on opposite sides of the installation plates 3 at equal heights and at interval. The transmission shaft 2 is installed on the installation plates through a bearing structure and penetrates through an inner cavity of the wing plate 5. The second gears 6 are respectively arranged on the transmission shaft 2 at locations corresponding to the first gears 4, the second gears 6 are located between the two first gears 4 and mesh with the two first gears 4 synchronously, and the two first gears 4 can be driven by the transmission shaft 2 to rotate in opposite directions.

The wing plate 5 is located between the installation plates 3, each end of the wing plate 5 is respectively connected with the two first gears 4, connecting shafts are respectively arranged at side faces of the two first gears 4 close to edges, the two connecting shafts are symmetrically distributed along a center shaft of the transmission shaft 2, and two ends of a shuttle-shaped end part of the wing plate 5 are respectively connected with the connecting shafts. Therefore, a direction of an acting force between the wing plate 5 and a water flow in a process of moving in a water body can be changed, and an effect of actively controlling the beam trawl to be up and down is achieved.

The above solenoid butterfly valves or the electromagnetic locks are controlled by a control system arranged on a fishing vessel, a water depth monitoring sensor 14 is installed on the beam 1, and the water depth monitoring sensor 14 is connected to the control system. By detecting a water depth of the trawl in real time, the angle of the wing plate 5 is adjusted in real time, and the water depth of the beam trawl is adjusted in real time based on a balance between the wing plates 5 and the beam trawl pulling rope. In combination with analysis of a core section (aqueous layer) of euphausia superba population density, tracking, aiming and fishing of euphausia superba by the beam trawl can be realized advantageously through metalimnion adjustment and control of the beam trawl.

## Claims

1. A metalimnion adjusting beam structure for a euphausia superba trawl, comprising a beam (1), and further comprising a forward drive hydrodynamic generating mechanism arranged to generate the rotation of an output shaft in a forward direction when being trawled, a reverse drive hydrodynamic generating mechanism arranged to generate the rotation of an output shaft in a reverse direction when being trawled, a transmission mechanism, and at least one rising-diving adjusting wing mechanism, wherein the transmission mechanism comprises a transmission shaft (2), the transmission shaft (2) is arranged in a direction parallel to the beam (1), the transmission shaft (2) is configured to rotate in opposite directions respectively through non-synchronous drive of the output shafts of the forward drive hydrodynamic generating mechanism and the reverse drive hydrodynamic generating mechanism, the rising-diving adjusting wing mechanism comprises installation plates (3), first gears (4) and a wing plate (5) with a shuttle-shaped cross section, the installation plates (3) are fixedly installed on the beam (1) in parallel and opposite modes, two first gears (4) are respectively installed on each opposite side of facing installation plates (3) at equal heights and at interval, the transmission shaft (2) is installed in the installation plates (3) in a rotatable mode, second gears (6) are arranged on the transmission shaft (2), the second gears (6) are located between each two first gears (4) and synchronously mesh with each two first gears (4), the wing plate (5) is installed between the installation plates (3), each end of the wing plate (5) is connected with each two first gears (4), and an angle of the wing plate (5) can be adjusted through rotation of an axis of the transmission shaft (2) driven by reverse rotation of each two first gears (4),
wherein operation of the forward drive hydrodynamic generating mechanism and the reverse drive hydrodynamic generating mechanism or transmission between the forward drive hydrodynamic generating mechanism as well as the reverse drive hydrodynamic generating mechanism and the transmission shaft (2) is controlled by a control system arranged on a fishing vessel respectively, a water depth monitoring sensor (14) is installed on the beam (1), and the water depth monitoring sensor (14) is connected to the control system.

2. The metalimnion adjusting beam structure for the euphausia superba trawl of claim 1, wherein the forward drive hydrodynamic generating mechanism comprises a first fairing (7), a forward impeller (8) and a forward output shaft, the forward impeller (8) is installed inside the first fairing (7), and the forward output shaft is driven by the forward impeller (8) to rotate; and the reverse drive hydrodynamic generating mechanism comprises a second fairing (9), a reverse impeller (10) and a reverse output shaft, the reverse impeller (10) is installed inside the second fairing (9), and the reverse output shaft is driven by the reverse impeller (10) to rotate.

3. The metalimnion adjusting beam structure for the euphausia superba trawl of claim 2, wherein the transmission mechanism further comprises a first bevel gear (11), a second bevel gear (12) and a third bevel gear (13), the third bevel gear (13) is installed on the transmission shaft (2), the first bevel gear (11) is installed on the forward output shaft, the second bevel gear (12) is installed on the reverse output shaft, and the first bevel gear (11) and the second bevel gear (12) respectively mesh with the third bevel gear (13).

4. The metalimnion adjusting beam structure for the euphausia superba trawl of claim 3, wherein solenoid butterfly valves are respectively arranged at stream approaching ends of the first fairing (7) and the second fairing (9) and respectively control on/off of the first fairing (7) and the second fairing (9).

5. The metalimnion adjusting beam structure for the euphausia superba trawl of claim 3, wherein electromagnetic locks are respectively arranged on the forward output shaft and the reverse output shaft and respectively control transmission on-off between the forward output shaft and the reverse output shaft.

6. The metalimnion adjusting beam structure for the euphausia superba trawl of claim 5, wherein hydrodynamic generators are respectively installed inside the first fairing (7) and the second fairing (9), the hydrodynamic generators are respectively driven by the forward impeller (8) and the reverse impeller (10) to generate electricity, and the electromagnetic locks are respectively powered by the hydrodynamic generators.

7. The metalimnion adjusting beam structure for the euphausia superba trawl of claim 1, wherein connecting shafts are respectively arranged at side faces of the two first gears (4) close to edges, the two connecting shafts are symmetrically distributed along a center shaft of the transmission shaft (2), and two ends of a shuttle-shaped end part of the wing plate (5) are respectively connected with the connecting shafts.

8. The metalimnion adjusting beam structure for the euphausia superba trawl of claim 1, wherein the transmission shaft (2) is installed on the installation plates (3) through a bearing structure and penetrates through an inner cavity of the wing plate (5).

9. The metalimnion adjusting beam structure for the euphausia superba trawl of claim 1, wherein the rising-diving adjusting wing mechanisms are symmetrically arranged on two sides of the beam (1) respectively, the forward drive hydrodynamic generating mechanism and the reverse drive hydrodynamic generating mechanism are located between the rising-diving adjusting wing mechanisms on the two sides, and an angle of the wing plates (5) on the two sides is adjusted by synchronous drive of the transmission shaft (2).

## Patentansprüche

1. Metalimnion-Einstellbaumstruktur für ein Euphausia superba-Schleppnetz, umfassend: einen Baum (1); und ferner umfassend einen Vorwärtsantrieb-Hydrodynamik-Generierungsmechanismus, der so angeordnet ist, dass er bei Schleppvorgängen die Drehung einer Ausgangswelle in Vorwärtsrichtung erzeugt; einen Rückwärtsantrieb-Hydrodynamik-Generierungsmechanismus, der so angeordnet ist, dass er bei Schleppvorgängen die Drehung einer Ausgangswelle in Rückwärtsrichtung erzeugt; einen Übertragungsmechanismus; und mindestens einen Flügelmechanismus zum Einstellen des Auf- und Abtauchens, wobei der Übertragungsmechanismus eine Übertragungswelle (2) umfasst, wobei die Übertragungswelle (2) in einer Richtung parallel zum Baum (1) angeordnet ist, wobei die Übertragungswelle (2) so konfiguriert ist, dass sie durch nicht-synchronen Antrieb der Ausgangswellen des Vorwärtsantrieb-Hydrodynamik-Generierungsmechanismus und des Rückwärtsantrieb-Hydrodynamik-Generierungsmechanismus jeweils in entgegengesetzten Richtungen rotiert, wobei der Flügelmechanismus zum Einstellen des Auf- und Abtauchens Montageplatten (3), erste Zahnräder (4) und eine Flügelplatte (5) mit einem spindelförmigen Querschnitt umfasst, wobei die Montageplatten (3) fest parallel und gegenüberliegend am Baum (1) installiert sind, wobei zwei erste Zahnräder (4) jeweils an gegenüberliegenden Seiten der gegenüberliegenden Montageplatten (3) in gleicher Höhe und mit Abstand installiert sind, wobei die Übertragungswelle (2) in den Montageplatten (3) drehbar installiert ist, wobei zweite Zahnräder (6) an der Übertragungswelle (2) angeordnet sind, wobei sich die zweiten Zahnräder (6) zwischen jeweils zwei ersten Zahnrädern (4) befinden und synchron mit zwei ersten Zahnrädern (4) ineinandergreifen, wobei die Flügelplatte (5) zwischen den Montageplatten (3) installiert ist, wobei jedes Ende der Flügelplatte (5) mit jeweils zwei ersten Zahnrädern (4) verbunden ist, und wobei ein Winkel der Flügelplatte (5) durch Drehung einer Achse der Übertragungswelle (2) eingestellt werden kann, die durch die entgegengesetzte Drehung von jeweils zwei ersten Zahnrädern (4) angetrieben wird,
wobei der Betrieb des Vorwärtsantrieb-Hydrodynamik-Generierungsmechanismus und des Rückwärtsantrieb-Hydrodynamik-Generierungsmechanismus oder die Übertragung zwischen dem Vorwärtsantrieb-Hydrodynamik-Generierungsmechanismus sowie dem Rückwärtsantrieb-Hydrodynamik-Generierungsmechanismus und der Übertragungswelle (2) jeweils durch ein auf einem Fischereifahrzeug angeordnetes Steuerungssystem gesteuert wird, wobei ein Wassertiefenüberwachungssensor (14) auf dem Baum (1) installiert ist, und wobei der Wassertiefenüberwachungssensor (14) mit dem Steuerungssystem verbunden ist.

2. Metalimnion-Einstellbaumstruktur für ein Euphausia superba-Schleppnetz gemäß Anspruch 1, wobei der Vorwärtsantrieb-Hydrodynamik-Generierungsmechanismus eine erste Verkleidung (7), ein Vorwärtslaufrad (8) und eine Vorwärtsausgangswelle umfasst, wobei das Vorwärtslaufrad (8) innerhalb der ersten Verkleidung (7) installiert ist und die Vorwärtsausgangswelle durch das Vorwärtslaufrad (8) zum Drehen angetrieben wird; und wobei der Rückwärtsantrieb-Hydrodynamik-Generierungsmechanismus eine zweite Verkleidung (9), ein Rückwärtslaufrad (10) und eine Rückwärtsausgangswelle umfasst, wobei das Rückwärtslaufrad (10) innerhalb der zweiten Verkleidung (9) installiert ist und die Rückwärtsausgangswelle durch das Rückwärtslaufrad (10) zum Drehen angetrieben wird.

3. Metalimnion-Einstellbaumstruktur für ein Euphausia superba-Schleppnetz gemäß Anspruch 2, wobei der Übertragungsmechanismus ferner ein erstes Kegelrad (11), ein zweites Kegelrad (12) und ein drittes Kegelrad (13) umfasst, wobei das dritte Kegelrad (13) auf der Übertragungswelle (2) installiert ist, wobei das erste Kegelrad (11) auf der Vorwärtsausgangswelle installiert ist und das zweite Kegelrad (12) auf der Rückwärtsausgangswelle installiert ist, und wobei das erste Kegelrad (11) und das zweite Kegelrad (12) jeweils mit dem dritten Kegelrad (13) ineinandergreifen.

4. Metalimnion-Einstellbaumstruktur für ein Euphausia superba-Schleppnetz gemäß Anspruch 3, wobei magnetbetätigte Schmetterlingsventile jeweils an den Strömungsansatzenden der ersten Verkleidung (7) und der zweiten Verkleidung (9) angeordnet sind und jeweils die Ein-/Ausschaltung der ersten Verkleidung (7) und der zweiten Verkleidung (9) steuern.

5. Metalimnion-Einstellbaumstruktur für ein Euphausia superba-Schleppnetz gemäß Anspruch 3, wobei elektromagnetische Schlösser jeweils an der Vorwärtsausgangswelle und der Rückwärtsausgangswelle angeordnet sind und jeweils die Ein-/Ausschaltung der Übertragung zwischen der Vorwärtsausgangswelle und der Rückwärtsausgangswelle steuern.

6. Metalimnion-Einstellbaumstruktur für ein Euphausia superba-Schleppnetz gemäß Anspruch 5, wobei hydrodynamische Generatoren jeweils innerhalb der ersten Verkleidung (7) und der zweiten Verkleidung (9) installiert sind, wobei die hydrodynamischen Generatoren jeweils durch das Vorwärtslaufrad (8) und das Rückwärtslaufrad (10) angetrieben werden, um Strom zu erzeugen, und wobei die elektromagnetischen Schlösser jeweils durch die hydrodynamischen Generatoren mit Strom versorgt werden.

7. Metalimnion-Einstellbaumstruktur für ein Euphausia superba-Schleppnetz gemäß Anspruch 1, wobei Verbindungsschäfte jeweils an den Seitenflächen der beiden ersten Zahnräder (4) in der Nähe der Kanten angeordnet sind, wobei die beiden Verbindungsschäfte symmetrisch entlang einer Mittelachse der Übertragungswelle (2) verteilt sind, und wobei zwei Enden eines spindelförmigen Endteils der Flügelplatte (5) jeweils mit den Verbindungsschäften verbunden sind.

8. Metalimnion-Einstellbaumstruktur für ein Euphausia superba-Schleppnetz gemäß Anspruch 1, wobei die Übertragungswelle (2) durch eine Lagerstruktur auf den Montageplatten (3) installiert ist und durch einen Innenhohlraum der Flügelplatte (5) hindurchgeht.

9. Metalimnion-Einstellbaumstruktur für ein Euphausia superba-Schleppnetz gemäß Anspruch 1, wobei die Flügelmechanismen zum Einstellen des Auf- und Abtauchens jeweils symmetrisch an zwei Seiten des Baums (1) angeordnet sind, wobei der Vorwärtsantrieb-Hydrodynamik-Generierungsmechanismus und der Rückwärtsantrieb-Hydrodynamik-Generierungsmechanismus zwischen den Flügelmechanismen zum Einstellen des Auf- und Abtauchens an den beiden Seiten angeordnet sind, und wobei ein Winkel der Flügelplatten (5) an den beiden Seiten durch synchronen Antrieb der Übertragungswelle (2) eingestellt wird.

## Revendications

1. Structure à poutre de réglage en métalimnion pour chalutage de Euphausia superba, comprenant une poutre (1), et comprenant en outre un mécanisme de génération hydrodynamique à entraînement direct disposé pour générer une rotation d'un arbre de sortie dans une direction directe lors du chalutage, un mécanisme de génération hydrodynamique à entraînement inverse disposé pour générer une rotation d'un arbre de sortie dans une direction inverse lors du chalutage, un mécanisme de transmission, et au moins un mécanisme à aile de réglage de montée-plongée, dans lequel le mécanisme de transmission comprend un arbre de transmission (2), l'arbre de transmission (2) est disposé dans une direction parallèle à la poutre (1), l'arbre de transmission (2) est configuré pour tourner dans des directions opposées respectivement par entraînement non synchrone des arbres de sortie du mécanisme de génération hydrodynamique à entraînement direct et du mécanisme de génération hydrodynamique à entraînement inverse, le mécanisme à aile de réglage de montée-plongée comprend des plaques d'installation (3), des premiers engrenages (4) et une plaque d'aile (5) de section transversale en forme de navette, les plaques d'installation (3) sont installées de manière fixe sur la poutre (1) en modes parallèle et opposé, deux premiers engrenages (4) sont installés respectivement sur chaque côté opposé des plaques d'installation (3) en regard à hauteurs égales et à un intervalle, l'arbre de transmission (2) est installé dans les plaques d'installation (3) en mode rotatif, des deuxièmes engrenages (6) sont disposés sur l'arbre de transmission (2), les deuxièmes engrenages (6) sont situés entre les deux premiers engrenages (4) et sont engrenés de manière synchrone avec chacun des deux premières engrenages (4), la plaque d'aile (5) est installée entre les plaques d'installation (3), chaque extrémité de la plaque d'aile (5) est reliée à chacun des deux premiers engrenages (4), et un angle de la plaque d'aile (5) est ajustable par rotation d'un axe de l'arbre de transmission (2) entraîné par rotation inverse de chacun des deux premiers engrenages (4),
dans lequel un fonctionnement du mécanisme de génération hydrodynamique à entraînement direct et du mécanisme de génération hydrodynamique à entraînement inverse ou une transmission entre le mécanisme de génération hydrodynamique à entraînement direct ainsi que le mécanisme de génération hydrodynamique à entraînement inverse et l'arbre de transmission (2) est commandé par un système de commande disposé sur un navire de pêche respectivement, un capteur de surveillance de la profondeur de l'eau (14) est installé sur la poutre (1) et le capteur de surveillance de la profondeur de l'eau (14) est connecté au système de commande.

2. Structure à poutre de réglage en métalimnion pour chalutage de Euphausia superba selon la revendication 1, dans laquelle le mécanisme de génération hydrodynamique à entraînement direct comprend un premier carénage (7), un impelleur direct (8) et un arbre de sortie directe, l'impelleur direct (8) est installé à l'intérieur du premier carénage (7), et l'arbre de sortie directe est entraîné par l'impelleur direct (8) à tourner ; et le mécanisme de génération hydrodynamique à entraînement inverse comprend un deuxième carénage (9), un impelleur inverse (10) et un arbre de sortie inverse, l'impelleur inverse (10) est installé à l'intérieur du deuxième carénage (9), et l'arbre de sortie inverse est entraîné par l'impelleur inverse (10) à tourner.

3. Structure à poutre de réglage en métalimnion pour chalutage de Euphausia superba selon la revendication 2, dans laquelle le mécanisme de transmission comprend en outre un premier engrenage conique (11), un deuxième engrenage conique (12) et un troisième engrenage conique (13), le troisième engrenage conique (13) est installé sur l'arbre de transmission (2), le premier engrenage conique (11) est installé sur l'arbre de sortie directe, le deuxième engrenage conique (12) est installé sur l'arbre de sortie inverse, et le premier engrenage conique (11) et le deuxième engrenage conique (12) sont engrenés respectivement avec le troisième engrenage conique (13).

4. Structure à poutre de réglage en métalimnion pour chalutage de Euphausia superba selon la revendication 3, dans laquelle des électrovannes papillon sont respectivement disposées à des extrémités d'entrée de flux du premier carénage (7) et du deuxième carénage (9) et commandent respectivement l'ouverture/fermeture du premier carénage (7) et du deuxième carénage (9).

5. Structure à poutre de réglage en métalimnion pour chalutage de Euphausia superba selon la revendication 3, dans laquelle des verrous électromagnétiques sont respectivement disposés sur l'arbre de sortie directe et l'arbre de sortie inverse et commandent respectivement la transmission marche/arrêt entre l'arbre de sortie direct et l'arbre de sortie inverse.

6. Structure à poutre de réglage en métalimnion pour chalutage de Euphausia superba selon la revendication 5, dans laquelle des générateurs hydrodynamiques sont installés à l'intérieur du premier carénage (7) et du deuxième carénage (9) respectivement, les générateurs hydrodynamiques sont entraînés par l'impelleur direct (8) et l'impelleur inverse (10) respectivement pour générer de l'électricité, et les verrous électromagnétiques sont alimentés par les générateurs hydrodynamiques respectivement.

7. Structure à poutre de réglage en métalimnion pour chalutage de Euphausia superba selon la revendication 1, dans laquelle des arbres de liaison sont disposés respectivement sur des faces latérales des deux premiers engrenages (4) proches des bords, les deux arbres de liaison sont distribués de manière symétrique le long d'un arbre central de l'arbre de transmission (2), et deux extrémités d'une partie d'extrémité en forme de navette de la plaque d'aile (5) sont reliées aux arbres de liaison respectivement.

8. Structure à poutre de réglage en métalimnion pour chalutage de Euphausia superba selon la revendication 1, dans laquelle l'arbre de transmission (2) est installé sur les plaques d'installation (3) par l'intermédiaire d'une structure de palier et traverse une cavité intérieure de la plaque d'aile (5).

9. Structure à poutre de réglage en métalimnion pour chalutage de Euphausia superba selon la revendication 1, dans laquelle les mécanismes à aile de réglage de montée-plongée sont disposés de manière symétrique sur deux côtés de la poutre (1) respectivement, le mécanisme de génération hydrodynamique à entraînement direct et le mécanisme de génération hydrodynamique à entraînement inverse sont situés entre les mécanismes à aile de réglage de montée-plongée sur les deux côtés, et un angle des plaques d'aile (5) sur les deux côtés est ajusté par entraînement synchrone de l'arbre de transmission (2).
